# EUROPÄISCHE PATENTSCHRIFT

(11) **EP 1 429 984 B1**
(45) Veröffentlichungstag und Bekanntmachung des Hinweises auf die Patenterteilung: **26.04.2006**
(21) Anmeldenummer: 01976237.6
(22) Anmeldetag: 19.09.2001
(51) Int. Cl.: B65H 19/10

(54) **KLEBEBAND FÜR DEN FLIEGENDEN ROLLENWECHSEL**
ADHESIVE TAPE FOR AUTOMATIC REPLACEMENT OF ROLLS
RUBAN ADHESIF CON U POUR LE REMPLACEMENT AUTOMATIQUE DE ROULEAUX

(43) Veröffentlichungstag der Anmeldung: 23.06.2004
(73) Patentinhaber: tesa AG, 20253 Hamburg (DE)
(72) Erfinder: EIKMEIER, Markus, 22769 Hamburg (DE); GASSNER, Thomas, 25436 Heidgraben (DE); GEBBEKEN, Bernhard, 21075 Hamburg (DE); NAGEL, Christoph, 22417 Hamburg (DE)
(86) Internationale Anmeldenummer: PCT/EP2001/010822
(87) Internationale Veröffentlichungsnummer: WO 2003/024850

(56) Entgegenhaltungen:
- DE-A- 19 830 673
- DE-A- 19 830 674
- US-A- 5 323 981

## Beschreibung

Die Erfindung betrifft ein Klebeband für den fliegenden Rollenwechsel von auf Rollen aufgewickeltem Flachbahnmaterial, ausgerüstet mit einem Hauptträger, einer Selbstklebemasse auf der Vorderseite und zumindest einem klebenden spaltbaren System auf der Rückseite sowie deren Verwendung.

Der fliegende Rollenwechsel ist in Papierfabriken oder dergleichen ein gängiges Verfahren, um eine alte, fast abgespulte Papierrolle durch eine neue zu ersetzen, ohne die schnell laufenden Maschinen anhalten zu müssen. Um ein sicheres Öffnen des neuen Papierballens beim Spliceprozeß zu gewährleisten, findet beispielsweise eine Perforation der obersten Papierlage und somit ein gezieltes Reißen der Papierbahn an der Perforation statt.
Besser wird das Ende der alten Papierbahn wird mit dem Anfang der neuen Papierbahn verklebt, um einen möglichst kontinuierlichen Betrieb zu gewährleisten. Es sind unterschiedliche Verklebungs- und Vorbereitungsformen mit verschiedenen Klebebandtypen und Splicegeometrien bekannt. So werden doppelseitig klebende Selbstklebebänder, sogenannte Fixe, eingesetzt, die einerseits hochklebrig und -tackig sind, andererseits aber aufgrund ihrer wasserlöslichen Selbstklebemassen und Papierträger beim Wiedereinsatz der Papierabfälle in der Papiermaschine nicht stören.
Klassisch werden die Fixe in Handarbeit am Bahnanfang verklebt, dieser Prozeß erfordert den Einsatz von Fachpersonal und führt zu technisch nicht vorteilhaften Ergebnissen, da die Verklebungen durch die Abfolge von Papierbahnen und Klebestreifen relativ dick sind.
Für die Verklebung beim fliegenden Rollenwechsel sind diverse Produkte erhältlich, insbesondere solche, welche neben einem Papierträger eine wasserlösliche Selbstklebemasse beidseits beschichtet aufweisen.

Verfahren zum Vorbereiten und zur Durchführung des Rollenwechsels und entsprechende Klebebänder werden beispielsweise in den Schriften EP 418 527 A2, DE 40 33 900 A1, DE 196 28 317 A1, DE 196 32 689 A2 und DE 198 30 673 A1 vorgestellt.

Es ist aus der DE 196 28 317 A1 ein Klebeband für derartige Anwendungen bekannt, bei dem nach erfolgten Splice keine klebenden Flächen mehr auftreten, indem dort ein spaltfähiger Papierträger zum Einsatz kommt, der beim Splice spaltet und nach erfolgtem Splice die Klebmassen abdeckt.
Das nichtklebende Abdecken von sonst offen liegenden klebenden Bereichen offenbart auch die DE 196 32 689 A2. Hier wird ein Klebeband für dynamische Belastungen beim Spliceverfahren beschrieben, dessen Papierträger spaltet und mit seinen Resten die Klebemassen abdeckt.

Die DE 198 30 673 ist als nächster Stand der Technik anzusehen und zeigt ein Klebeband für den fliegenden Rollenwechsel in Papierveredelungsmaschinen oder dergleichen, welche einen beidseitig mit einer wasserlöslichen Selbstklebemasse beschichteten Papierträger aufweist. Ein Randbereich der Rückseite des Klebebandes ist mit einem einseitig klebenden Klebeband ausgerüstet, welches seinerseits einen spaltfähigen Papierträger aufweist.
Eine weitere Variante ist in DE 198 30 674 beschrieben. Hier ist ein Klebeband mit zwei Spaltstreifen dargestellt.

Auch die DE 199 02 179 A1 zeigt ein Klebeband für ein Spliceverfahren. Dieses Klebeband trägt an seiner nichtklebenden Rückseite ein doppelseitiges Klebeband, welches einen spaltfähigen Papierträger aufweist, der beim Spliceverfahren spaltet und die jeweiligen Kleber abdeckt. Zur Vermeidung von Reißern beim fliegenden Rollenwechsel ist das aufkaschierte Klebeband mit einem Papierträger aus Spaltpapier eingerückt angeordnet, nämlich in einem gewissen Abstand von der Längskante des Klebebandes.

In der Praxis zeigen sich bei den Klebebändern entsprechend des Standes der Technik Nachteile. Nachteilig ist es bei den vorstehend genannten Klebebändern insbesondere, daß diese unter die oberste Papierbahn eines Ballens geklebt werden müssen. Dies erweist sich in der Praxis als schwierig und ist insbesondere wenig geeignet für eine automatisierte Anbringung mit Maschinenhilfe, einem Applikator oder dergleichen. Ein Aufkleben statt Hinterkleben ist also erwünscht.

Dabei findet die Verklebung des Klebebandes zur Vorbereitung des Splices immer unter der obersten Lage der neuen Papierrolle statt. Bei dieser Art der Verklebung besteht weiterhin die Gefahr, daß sich Falten in der obersten Papierlage bilden, oder daß es zu Lufteinschlüssen unter der obersten Papierlage kommt, die dann im Spliceprozeß zu Problemen führen.
In der DE 198 30 673 A1 ist zwar ein Klebeband für die Applikation auf die oberste Papierlage einer neuen Papierrolle beschrieben, aber auch dieses Klebeband weist deutliche Schwächen aufgrund des Produktaufbaus und der damit komplizierten Verklebung auf, da dieses Klebeband für die einwandfreie Funktionsweise sehr genau justiert werden muß und auch hier eine automatisierte Applikation erschwert wird. Das in der DE 198 30 673 beschriebene Klebeband muß bündig mit der vorderen Papierkante der neuen Papierrolle verklebt werden, da sonst die Selbstklebemasse auf der Unterseite des Hauptträgers die zweite Papierlage mit verklebt, was dann zu einem unkontrollierten Öffnen und somit zu Abrissen führt.

Ergänzend zu den genannten Druckschriften wird auf die zwischenveröffentlichen DE 101 18 362 und WO 03/024850 hingewiesen

Aufgabe der Erfindung war es daher, ein Klebeband für den Spliceprozeß zur Verfügung zu stellen, welches die Nachteile des Standes der Technik nicht oder nur in verminderter Weise aufweist, welches sich insbesondere für eine automatisierte Applikation eignet.

Gelöst wird die Aufgabe überraschend und für den Fachmann unerwartet durch ein Klebeband, wie dieses in den Ansprüchen näher beschrieben ist.

Demgemäß betrifft der Anspruch 1 ein Klebeband für den fliegenden Rollenwechsel von auf Rollen aufgewickeltem Flachbahnmaterial, ausgerüstet mit einem Hauptträger, einer Selbstklebemasse auf der Vorderseite, zumindest einem klebenden spaltbaren System und zumindest einem nichtspaltenden selbstklebenden System auf der Rückseite.
Das nichtspaltende selbstklebende System liegt dabei bevorzugt in Form eines Streifens vor.

"Nichtspaltend" in diesem Zusammenhang bezieht sich auf die Funktion dieses Streifens für den Rollenwechsel, wie sie im folgenden noch näher dargestellt wird. Hierbei soll keine Spaltung des nichtspaltenden Systems auftreten. Ob das System bei anderen Anwendungen prinzipiell zur Spaltung in der Lage ist oder nicht, bleibt hierbei offen.

Das erfinderische Klebeband wird mit dem nichtspaltenden selbstklebenden System auf der Unterseite auf die oberste Papierbahn verklebt, in der Art, daß die Papierkante bündig mit dem Streifen des selbstklebenden Systems abschließt oder sie leicht überragt. Dann wird das spaltbare System auf die Oberseite der zweiten Papierlage der neuen Papierrolle verklebt. Die Papierkante schließt dabei bündig mit dem nichtspaltenden selbstklebenden System ab oder liegt zwischen diesem und dem spaltenden System.
Danach wird die Abdeckung von der Selbstklebemasse der Oberseite entfernt, und die Rolle ist für den Splice vorbereitet.
In einer bevorzugten Ausführungsform haben das selbstklebende spaltbare System und der Streifen des nichtspaltenden selbstklebenden Systems auf der Rückseite des Klebebandes einen Abstand L von mindestens 2 mm voneinander, besonders von mindestens 3 mm, ganz besonders von mindestens 5 mm. Durch den Abstand L muß das Klebeband beziehungsweise das nichtspaltende System nicht exakt bündig mit der vorderen Papierkante der neuen Papierrolle verklebt werden; vielmehr ist es zur Gewährleistung einer einwandfreien Funktionsweise hinreichend, wenn die vordere Papierkante im Bereich des Abstandes L zwischen dem nichtspaltenden System 10 und dem spaltenden System 6 liegt.

Das spaltbare System hat vorteilhaft eine Breite (Richtung senkrecht zur Längsrichtung des Klebebandes) von 3 bis 50 mm, insbesondere von 6 bis 40 mm, ganz besonders von 6 bis 15 mm.
In einer bevorzugten Ausführungsform ist das spaltbare System im Bereich der Vorderkante (Längskante 14) des Klebebandes eingerückt, so daß der Hauptträger das spaltbare System auf Seiten der Vorderkante um eine Länge E_{S} überragt, wobei vorteilhaft E_{S} bis zu 15 mm , insbesondere 0,5 bis 15 mm, bevorzugt 1 bis 7 mm, sehr bevorzugt 1,5 bis 3,5 mm beträgt.
Abhängig von der Anwendung kann bevorzugt ebenfalls eine Variante des erfinderischen Klebebandes eingesetzt werden, bei der das spaltbare System direkt an der Vorderkante des Hauptträgers liegt, also nicht eingerückt ist.
Weiterhin kann es für bestimmte Anwendungen von Vorteil sein, wenn mehrere selbstklebende spaltbare Streifen auf der Rückseite des Trägers vorgesehen sind.

Als nichtspaltendes selbstklebendes System läßt sich in hervorragender Weise ein doppelseitiges Klebeband mit oder ohne Träger einsetzen, alternativ ist es ebenfalls günstig, eine Selbstklebemasse im Streifstrich aufzutragen.

Die maximalen Breite B_{N} (Richtung senkrecht zur Längsrichtung des Klebebandes) des nichtspaltenden Systems ergibt sich aus der Breite B_{H} des Hauptträgers, verringert um die Breite B_{S} des spaltenden Systems und den Anstand L, gegebenenfalls zusätzlich verringert um die eingerückten Längen E_{S} und E_{N}. Je nach Anwendung werden E_{N}, B_{N}, B_{H}, B_{S} und E_{S} in Relation zueinander optimiert, insbesondere, um eine gute Verklebung über die Selbstklebemasse 10 und eine gute Funktionsweise des spaltenden Systems 6 zu gewährleisten.

Das spaltfähige System besteht bevorzugt aus Papier, Folie oder einem Verbund aus Papieren, Folien oder Papieren mit Folien. Es hat vorteilhaft einen deutlich geringeren Spaltwiderstand als ein Papierträger, der Zugkräfte aufnehmen muß. Das oder die spaltbaren Systeme basieren bevorzugt auf geleimtem hochverdichtetem Papier, auf einem Verbund aus Papier und Folie oder auf einem Verbund aus zwei Folien, wobei der Verbund aus definiert punkt- und/oder linienförmig verbundenen Papieren und/oder Folien bestehen kann. Hierfür kommen beispielsweise insbesondere folgende Papiere, Papierverbundsysteme oder Folien in Frage:
- leicht spaltbare Papiersysteme
- Duplexpapiere
   (definiert zusammenlaminierte Papiere, der Spaltvorgang verläuft extrem homogen; es entstehen keine Spannungsspitzen, z. B. durch inhomogene Verdichtung. Diese Papiere werden zur Herstellung von Tapeten und Filtern eingesetzt.)
- Definiert zusammengeleimte hochverdichtete Papiere (Papiere mit einer hohen Spaltfestigkeit).
   Die Leimung kann beispielsweise mit Stärke, stärkehaltigen Derivaten, Tapetenkleister auf Basis von Methylcellulose (tesa® Kleister , tesa AG, Hamburg; Methylan®, Henkel KgaA, Düsseldorf) oder auch auf Basis von Polyvinylalkoholderivaten erfolgen.
   Beschrieben werden solche Systeme beispielsweise in der EP 0 757 657 A1.
   Spaltfähige Systeme, bei welchen die Spaltkräfte über die Größe der Verklebungspunkte bestimmt werden; solche Systeme werden beispielsweise in der DE 198 41 609 A1 beschrieben.
- Koextrudierte Folien.

In einer sehr bevorzugten Ausführungsform der Erfindung wird als Selbstklebemasse (im Sinne der Selbstklebemassen entsprechend der Positionsziffern 3, 8, 9 und/oder 10 der Figuren) eine Acrylathaftklebemasse eingesetzt. Es können vorteilhaft sowohl wasserlösliche als auch wasserunlösliche Acrylate eingesetzt werden.
Weiterhin lassen sich auch Natur- und Synthesekautschukmassen als auch Dispersionen der vorstehend beschriebenen Verbindungen einsetzen. Es sei darauf verwiesen, daß prinzipiell alle Basistypen von Haftklebemassen, welche für derartige Verklebungen geeignet sind, eingesetzt werden können.
Hochscherfeste Klebemassen sind für die Anwendung am Kalander oder bei Einsatz am Trockner interessant. Für die Anwendung in der Papierindustrie oder beim normalen Tageszeitungsdruck sind momentan hochtackige Klebmassen im Einsatz.
Bevorzugt werden hochscherfeste Selbstklebemassen auf der Vorderseite eingesetzt, besonders geeignet ist eine Haftklebemasse, deren Scherfestigkeit mehr als 1000 Minuten auf Streichrohpapier und mehr als 2000 Minuten auf Tiefdruckpapier, gemessen bei 23 °C und 55 % rel. Luftfeuchte bei 1 kg Belastung, beträgt. Hochscherfeste Haftklebemassen erlauben den Einsatz der entsprechend gespleißten Flachbahnen in Prozessen, welche Kalander oder Druckmaschinen mit Trocknungseinrichtungen beinhalten.
Ganz bevorzugt wird für das nichtspaltende selbstklebende System 10 eine Klebemasse verwendet, welche eine höhere Scherfestigkeit aufweist als die Klebemasse 3. Die Klebemasse 3 wird bevorzugt mit einem hohen Tack (Anfaßklebrigkeit) gewählt.
Die Messung der Scherfestigkeit erfolgt folgendermaßen:
Zur Messung der Scherfestigkeit von Klebmassen werden diese auf einen Standardträger (Polyesterfolie; Dicke: 25 µm) beschichtet. Vorteilhafterweise wird ein immer gleicher Masseauftrag von 25 g/m² gewählt.
Nach dem Trocknen und einer eventuellen Vernetzung der Klebmasse wird ein Streifen von 13 mm Breite und mindestens 20 mm Länge herausgeschnitten und auf ein definiertes Papier (z. B. Tiefdruckpapier, z. B. Neopress T 54, 54 g/m², oder Streichrohpapier, z. B. Mediaprint, 135 g/m²) verklebt. Die Verklebungsfläche beträgt 13 mm x 20 mm. Um einen konstanten Andruck beim Verkleben zu gewährleisten, wird der Prüfling mit einer Rolle (Gewicht: 2 kg) zweimal langsam überrollt. Das so hergestellte Prüfmuster wird mit einem Gewicht von 1 kg parallel zur Verklebungsebene belastet und die Zeit gemessen, die der Klebestreifen auf dem Papier verbleibt.
Für eine bessere Differenzierung der einzelnen Klebmassen wird der Test entsprechend bei weiteren Prüftemperaturen (z.B. 40 °C und 70 °C) durchgeführt.
Um eine fehlerfreie Funktion zu gewährleisten, muß die Klebmasse ein Gewicht von 1 kg mehr als 1000 Minuten auf Streichrohpapier und mehr als 2000 Minuten auf Tiefdruckpapier bei 23 °C und 55 % rel. Luftfeuchte halten.
Als scherfeste Selbstklebemassen, insbesondere im Sinne der Selbstklebemasse 10, können beispielsweise Acrylatselbstklebemassen der folgenden Zusammensetzung eingesetzt werden:
40 bis 90 Gew.-% Acrylsäure, 60 bis 10 % Butylacrylat, oder
40 bis 90 Gew.-% Acrylsäure, 30 bis 5 Gew.-% Butylacrylat, 30 bis 5 Gew.-% Ethylhexylacrylat
Weichmacherzusatz: ethoxylierte Alkylamine, vorzugsweise C16 bis C18, weiter vorzugsweise mit 15 bis 25 Ethoxy-Einheiten.
Die Abmischung Weichmacher mit Polymer beträgt zwischen 55 bis 75 Gew.-% Weichmacher und 25 bis 45 Gew.-% Polymer.
Die Polymerisation erfolgt radikalisch in polaren Lösungsmitteln mit Ethanol als Regler. Es erfolgt eine Teilvernetzung mit Aluminiumchelat (0,3 bis 1,2 Gew.-%, bezogen auf die Gesamtmenge).

Bevorzugt wird ein reißfester Papier- oder Folienträger als Hauptträger eingesetzt. Als Trägermaterialien seien hier beispielsweise angeführt: schwach gekreppte Papiere, maschinenglatte Rohpapiere, einseitig gestrichene glatte Rohpapiere, beidseitig gestrichene, verdichtete, bedruckbare Decorepapiere, einseitig doppel gestrichene, holzfreie, hochglänzende Kraftpapiere, ohne sich durch diese Beispiele in der Wahl der Trägermaterialien unnötig einschränken zu wollen.

In einer vorteilhaften Ausführungsform ist das Klebeband mit zumindest einer mittels eines Detektors maschinell (berührungslos) erkennbaren Vorrichtung ausgestattet, wobei die Erkennung bevorzugt durch Metall, Transpondersysteme oder durch optische Vorrichtungen erzielt wird.
In den hier dargestellten Ausführungsformen der Erfindung ist der Einsatz von Signaletiketten, welche herkömmlich zur Steuerung des Spliceprozesses eingesetzt werden, nicht nötig.
In einer bevorzugten Variante besteht der Hauptträger (2) aus einem Material besteht, welchem zumindest ein detektierbarer Zusatz zugesetzt ist, und/oder der Hauptträger weist zumindest eine Schicht (X) aus einem detektierbaren Material auf.

In einer Ausführungsform des erfinderischen Klebebandes werden dem eigentlichen Trägermaterial beispielsweise Metallpulver- oder Granulate beigemischt, oder das Trägergrundgerüst wird mit einer oder mehreren Metallschichten versehen. In einer weiteren Variante des erfinderischen Klebebandes wird die integrierte Signalfunktion in der Art realisiert, daß der Hauptträger auf der Ober- und/oder auf der Unterseite mit einer Aluminiumschicht versehen ist, und zwar vorteilhaft vollflächig. Statt Aluminium lassen sich als Schicht auch alle weiteren entsprechend der Anforderungen detektierbaren Materialien verwenden, insbesondere Metalle, beispielsweise Kupfer, Silber, Gold.
Derartige Schichten können sich unabhängig voneinander sowohl auf der Vorder- als auch auf der Rückseite des Klebebandes beziehungsweise des Hauptträgers befinden.
In einer nächsten Ausführungsform der Erfindung wird die Detektion durch Transpondersysteme hervorgerufen, insbesondere durch Dünnschichttranspondem, welche in das Klebeband integriert werden. Hier sind Ausführungen mit aktiven und passiven Transpondern realisierbar.
Eine weitere Ausführungsform des erfinderischen Klebebandes zeichnet sich dadurch aus, daß das Klebeband mit optisch registrierbaren Einrichtungen versehen ist. Dies können beispielsweise Strichcodes sein, welche mit einem Laser gelesen werden können. Bei der Verwendung von Strichcodes lassen sich neben der eigentlichen Detektionswirkung zusätzlich Informationen übermitteln, beispielsweise Angaben über Art oder Bahnstärke der neuen Rolle. So kann bei Einsatz von Rollen unterschiedlicher Art oder Beschaffenheit die Verarbeitungsanlage automatisch auf die neuen Verarbeitungsbedingungen eingeregelt werden, ohne daß es einer weiteren äußeren Steuerung bedarf.
In ähnlicher Weise funktionieren optische Reflektoren oder Beugungsgitter, welche im oder am Hauptträger des Klebebandes angebracht sind. Diese können ebenfalls optisch detektiert werden und den Splicevorgang auslösen.
Ein weiteres Beispiel für optisch detektierbare Vorrichtungen sind bestimmte Farbgebungen des Hauptträgers, welche durch geeignete Detektiersysteme ebenfalls registriert werden können.

Weiterhin betrifft die Erfindung ein Spliceverfahren, bei dem die oberste Papierbahn 11 einer Rolle mit einem Klebeband 1 überklebt wird, indem das auf der Rückseite des Klebebandes befindliche nichtspaltende System 10 an das Bahnende auf der obersten Papierlage 11 verklebt wird, während das auf der Rückseite des Klebebandes 1 befindliche doppelseitig klebende spaltbare System 6 seinerseits mit der darunter liegenden zweiten Papierbahn 12 verklebt und damit die oberste Papierbahn 11 sichert, wobei zunächst das gegebenenfalls auf der Selbstklebemasse 3 befindliche Trennmaterial 4 nicht abgezogen wurde, so daß der zum Spliceverfahren benötigte Teil der Selbstklebemasse 3 noch mit Trennmaterial 4 abgedeckt ist und die Papierrolle in diesem Zustand keine freie klebende Fläche aufweist, worauf zur abschließenden Vorbereitung des Spliceverfahrens das gegebenenfalls noch vorhandene Trennmaterial 4 entfernt wird, worauf die so ausgerüstete neue Papierrolle neben eine fast gänzlich abgespulte, zu ersetzende alte Papierrolle plaziert wird und auf die gleiche Drehgeschwindigkeit wie diese beschleunigt wird, dann gegen die alte Papierbahn gedrückt wird, wobei die offenliegende Selbstklebemasse des Klebebandes mit der alten Papierbahn 13 bei im wesentlichen gleichen Geschwindigkeiten der Papierbahnen verklebt, während zugleich das spaltfähige System 6 spaltet und beide Selbstklebemassen 8 und 9, die auf ihm beschichtet waren, mit seinen Resten nichtklebend abdeckt.

In einer bevorzugten Variante des Verfahrens wird das Klebeband 1 rechtwinklig zur laufenden Papierbahn verklebt oder aber im spitzen Winkel von bis zu 30°, insbesondere bis zu 10°.

In einer weiteren vorteilhaften Variante des erfinderischen Verfahrens wird das Klebeband 1 mittels eines Automaten halbautomatisch oder vollautomatisch auf die Papierrolle appliziert. Das erfinderische Klebeband 1 vereinfacht eine maschinelle, automatisierte Aufbringung auf neue Rollen zur Vorbereitung des Splicevorganges.

Im folgenden soll die Erfindung anhand eines Ausführungsbeispiels näher beschrieben werden, ohne sie damit aber unnötig einschränken zu wollen. Es zeigen:
- Fig. 1: eine seitliche, schematische Ansicht eines erfindungsgemäßen Klebebandes
- Fig. 2: eine seitliche, schematische Ansicht eines erfindungsgemäßen Klebebandes mit einer detektierbaren Vorrichtung
- Fig. 3: eine seitliche, schematische Ansicht des Klebebandes gemäß Fig. 1, aufgeklebt auf eine Papierrolle und fertig für den fliegenden Rollenwechsel
- Fig. 4: eine Ansicht gemäß Fig. 2, aber nach erfolgtem fliegenden Rollenwechsel

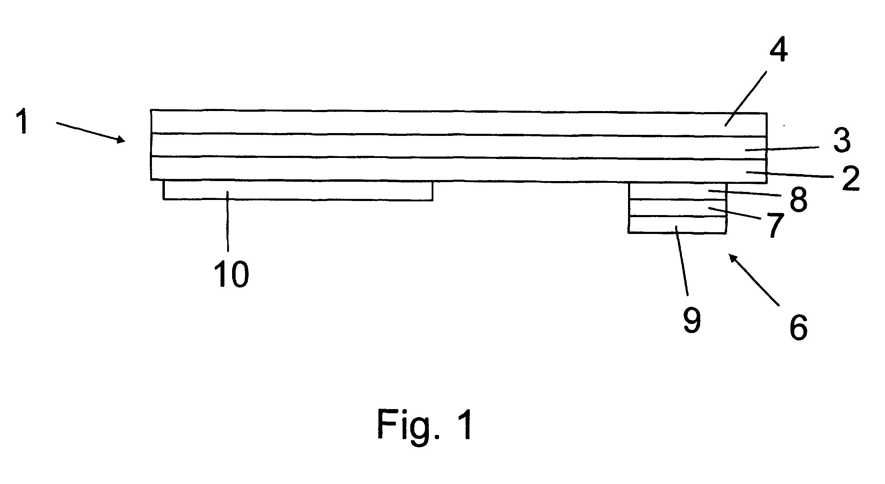

Im einzelnen zeigt Fig. 1 ein Klebeband 1 mit einem Hauptträger 2 aus schwach gekrepptem Kraftpapier, einseitig beschichtet mit einer wasserlöslichen Selbstklebemasse 3. Die Gesamtdicke des Hauptträgers 2 mit Selbstklebemasse 3 beträgt 0,115 mm, die Breite 75 mm. Die Selbstklebemasse 3 ist abgedeckt mit einem silikonisierten Trennpapier 4. Am rechten Ende des Klebebandes 1 ist ein Streifen eines doppelseitig klebenden Klebebandes 6 unterklebt, bestehend aus einem Papierträger 7 aus Spaltpapier, beidseits beschichtet mit wasserlöslicher Selbstklebemasse 8 bzw. 9. Das Klebeband 6 hat eine Breite von 12 mm. Am linken Ende ist ein Streifen einer Selbstklebemasse 10 kaschiert, welcher in diesem Falle ebenfalls eine Breite von 12 mm aufweist.

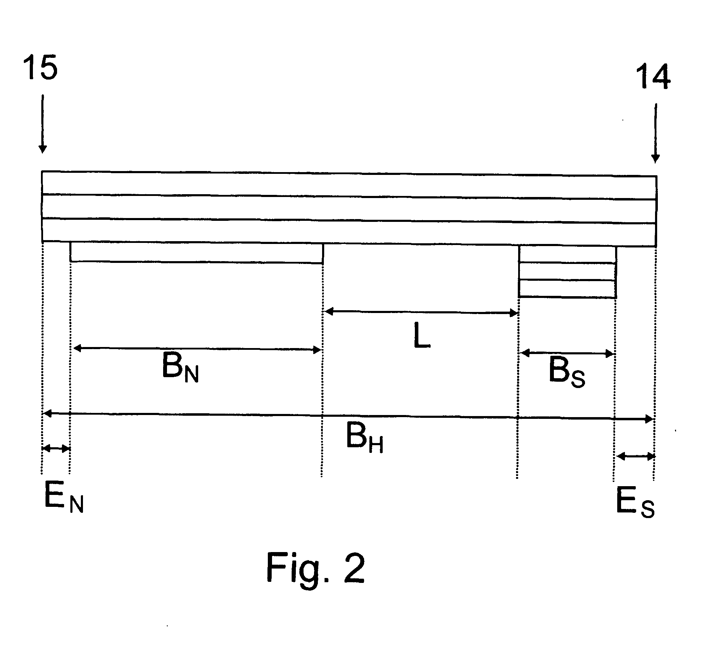

Fig. 2 zeigt ein Klebeband 1 mit einem Hauptträger 2, einseitig beschichtet mit einer wasserlöslichen Selbstklebemasse 3, entsprechend Fig. 1. Der Hauptträger 2 besteht hier aus einem Verbund aus schwach gekrepptem Kraftpapier und Aluminium. In dem Ausführungsbeispiel befindet sich eine Aluminiumschicht X auf der Vorderseite des Hauptträgers 2 (zwischen dem Hauptträger 2 und der Selbstklebeschicht 3). Die Gesamtdicke des Hauptträgers 2 mit Selbstklebemasse 3 beträgt 0,115 mm, die Breite 75 mm.

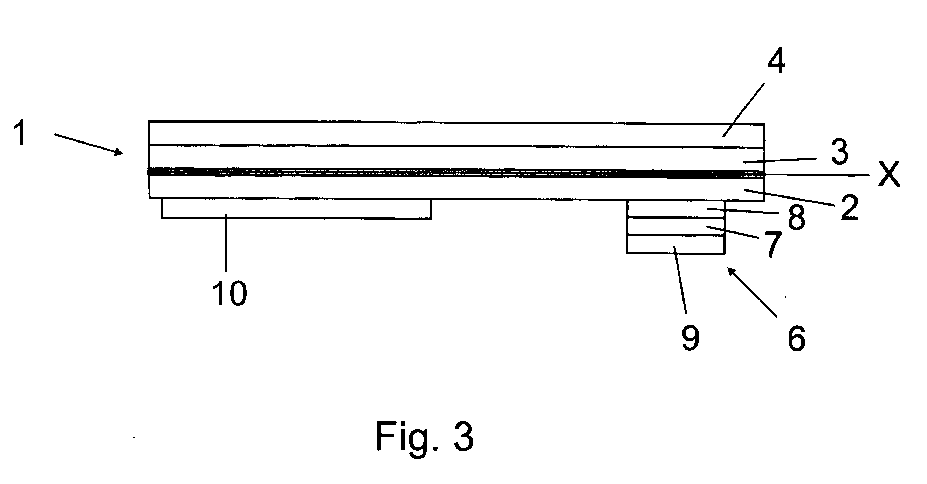

In Figur 3 ist dargestellt, wie ein erfindungsgemäßes Klebeband 1 auf eine (neue) Papierrolle geklebt ist, und zwar mit dem linken Teil 10 auf das Ende der obersten Papierlage 11 und mit dem rechten Teil 7 auf die Oberseite der darunter liegenden (zweiten) Lage 12 der Papierrolle.
Nun kann von der Oberseite des Klebebandes 1 das Trennpapier 4 abgezogen werden, so daß die so ausgerüstete Papierrolle fertig für einen fliegenden Rollenwechsel ist, wobei die Verklebung des Klebebandes 1 im rechten Winkel über die Rolle läuft. Die Selbstklebemasse 3 liegt in diesem Moment offen und stellt für den fliegenden Rollenwechsel die Kontaktfläche zu der ablaufenden Bahn der vorhergehenden Rolle dar. Die Kontaktfläche hat eine Breite von 75 mm und erstreckt sich über die gesamte Breite der Papierrolle.

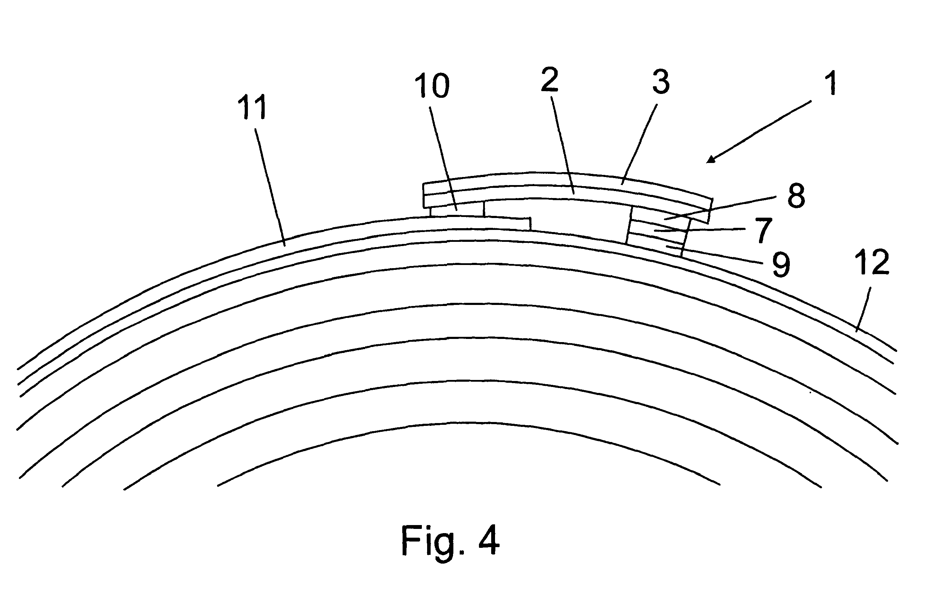

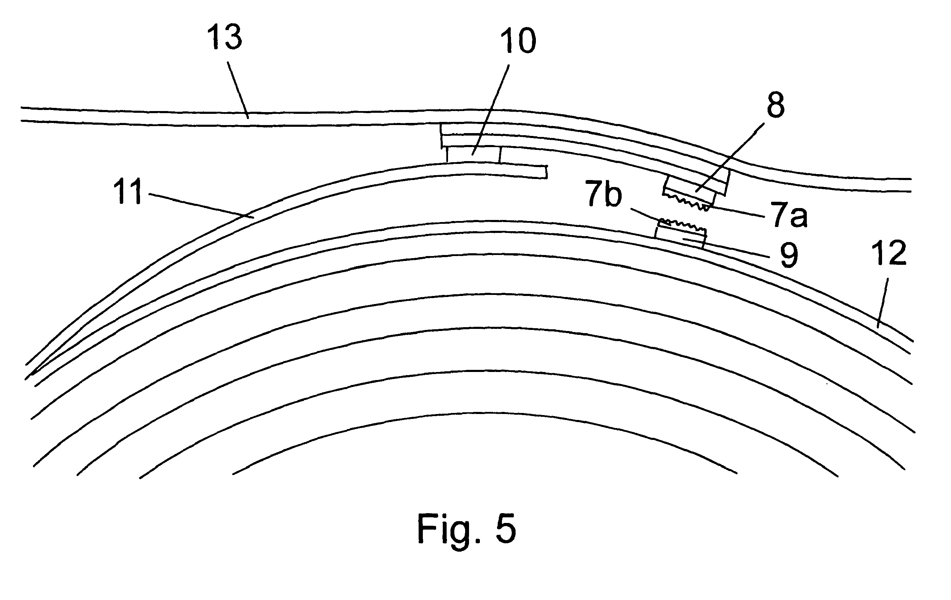

Die so ausgerüstete (neue) Papierrolle wird neben die fast abgewickelte (alte) Papierrolle gebracht, an die die neue angesetzt werden soll. Die neue Papierrolle wird auf eine Drehgeschwindigkeit beschleunigt, die der Geschwindigkeit der ablaufenden Bahn nahezu entspricht. Sind beide Geschwindigkeiten ausreichend synchronisiert, kann der Wechsel vollzogen werden: Die ablaufende Bahn wird mittels Andruckwelle mit dem Umfang der neuen Rolle in Kontakt gebracht und die Selbstklebemasse 3 gemäß Fig. 4 mit der ablaufenden Papierbahn 13 der alten Rolle verklebt.

Augenblicklich nach dem Klebekontakt spaltet der spaltfähige Papierträger 7 derart, daß ein Teil 7a auf dem Klebeband 1 verbleibt und dort die Selbstklebemasse 8 abdeckt, während der andere Teil 7b auf der Selbstklebemasse 9 verbleibt, welche auf der Papierbahn 12 klebt. Damit sind beide Selbstklebemassen 8 und 9 gewissermaßen neutralisiert, kleben nicht mehr und stören damit auch nicht im weiteren Prozeß in den Papierverarbeitungsmaschinen.
Die neue Papierrolle wird mit der Selbstklebemasse 3, die auf der obersten Lage der Papierrolle verklebt wurde, fest mit der ablaufenden Bahn verbunden.

## Patentansprüche

1. Klebeband für den fliegenden Rollenwechsel von auf Rollen aufgewickeltem Flachbahnmaterial, ausgerüstet mit einem Hauptträger (2), einer Selbstklebemasse (3) auf der Vorderseite und zumindest einem selbstklebenden spaltbaren System (6) auf der Rückseite, **dadurch gekennzeichnet, dass** weiterhin auf der Rückseite zumindest ein nichtspaltendes selbstklebendes System (10) vorgesehen ist, und dass das spaltfähige System (6) aus Papier, Folie oder einem Verbund aus Papieren, Folien oder Papieren mit Folien besteht und beidseitig mit Selbstklebemasse ausgerüstet ist.

2. Klebeband nach Anspruch 1, **dadurch gekennzeichnet, daß**
das selbstklebende spaltbare System (6) auf der Rückseite und das nichtspaltende selbstklebende System (10) auf der Rückseite einen Abstand L von mindestens 2 mm, besonders von mindestens 3 mm, ganz besonders von mindestens 5 mm aufweisen.

3. Klebeband nach zumindest einem der vorangehenden Ansprüche, **dadurch gekennzeichnet, daß**
es sich bei dem nichtspaltenden selbstklebenden System (10) um ein doppelseitiges Klebeband mit oder ohne Träger handelt.

4. Klebeband nach zumindest einem Ansprüche 1 oder 2, **dadurch gekennzeichnet, daß** es sich bei dem nichtspaltenden selbstklebenden System (10) um eine Selbstklebemasse im Streifenstrich handelt.

5. Klebeband nach zumindest einem der vorangehenden Ansprüche, **dadurch gekennzeichnet, daß**
die Selbstklebemasse (10) auf der Rückseite hochscherfest ist, insbesondere mit einer Scherfestigkeit von mindestens mehr als 1000 Minuten auf Streichrohpapier und mehr als 2000 Minuten auf Tiefdruckpapier bei 23 °C und 55 % rei. Luftfeuchte bei 1 kg Belastung.

6. Klebeband nach zumindest einem der vorangehenden Ansprüche, **gekennzeichnet durch**
zumindest eine mittels eines Detektors maschinell erkennbare Vorrichtung (X), wobei die Erkennung insbesondere **durch** Metall, Transponder oder **durch** optische Vorrichtungen erzielt wird.

7. Spliceverfahren, bei dem die oberste Papierbahn einer Rolle mit einem Klebeband (1) nach zumindest einem der Ansprüche 1 bis 7 überklebt wird, indem das auf der Rückseite des Klebebandes (1) befindliche nichtspaltende System (10) auf das Bahnende der obersten Papierlage (11) verklebt wird, während das auf der Rückseite des Klebebandes befindliche doppelseitig klebende spaltbare System (6) seinerseits mit der darunter liegenden zweiten Papierbahn (12) verklebt wird und damit die oberste Papierbahn (11) sichert, wobei zunächst das gegebenenfalls auf der Selbstklebemasse (3) befindliche Trennmaterial (4) nicht abgezogen wurde, so daß der zum Spliceverfahren benötigte Teil der Selbstklebemasse (3) noch mit Trennmaterial (4) abgedeckt ist und die Papierrolle in diesem Zustand keine freie klebende Fläche aufweist, worauf zur abschließenden Vorbereitung des Spliceverfahrens das gegebenenfalls noch vorhandene Trennmaterial (4) entfernt wird, worauf die so ausgerüstete neue Papierrolle neben eine fast gänzlich abgespulte, zu ersetzende alte Papierrolle plaziert wird und auf die gleiche Drehgeschwindigkeit wie diese beschleunigt wird, dann gegen die alte Papierbahn (13) gedrückt wird, wobei die offenliegende Selbstklebemasse (3) des Klebebandes (1) mit der alten Papierbahn (13) bei im wesentlichen gleichen Geschwindigkeiten der Papierbahnen verklebt, während zugleich der Träger (7) des spaltfähige Systems (6) spaltet und beide Selbstklebemassen (8, 9), die auf ihm beschichtet waren, mit seinen Resten (7a, 7b) nichtklebend abdeckt.

8. Spliceverfahren nach Anspruch 7, **dadurch gekennzeichnet, daß** das Klebeband (1) rechtwinklig zur laufenden Papierbahn verklebt wird oder aber im spitzen Winkel von bis zu 30°, insbesondere bis zu 10°.

9. Spliceverfahren nach zumindest einem der Ansprüche 7 oder 8, **dadurch gekennzeichnet, daß** das Klebeband (1) mittels eines Automaten halbautomatisch oder vollautomatisch auf die Papierrolle appliziert wird.

## Claims

1. Adhesive tape for the flying splice of flat web material wound up into rolls, said tape being equipped with a main carrier (2), a self-adhesive composition (3) on the front, and at least one self-adhesive cleavable system (6) on the back,
**characterized in that**
in addition on the back at least one noncleaving self-adhesive system (10) is provided and **in that** the cleavable system (6) is composed of paper, film or a composite of papers, films or papers with films and is provided with self-adhesive composition on both sides.

2. Adhesive tape of Claim 1, **characterized in that** the self-adhesive cleavable system (6) on the back and the noncleaving self-adhesive system (10) on the back have a spacing L of at least 2 mm, in particular at least 3 mm, and very particularly at least 5 mm.

3. Adhesive tape of at least one of the preceding claims, **characterized in that** the noncleaving self-adhesive system (10) is a double-sided adhesive tape with or without carrier.

4. Adhesive tape of at least one of Claims 1 or 2, **characterized in that** the noncleaving self-adhesive system (10) is a self-adhesive composition coated in a stripe.

5. Adhesive tape of at least one of the preceding claims, **characterized in that** the self-adhesive composition (10) is of high shear strength on the back, having in particular a shear strength of at least more than 1 000 minutes on coating base paper and more than 2 000 minutes on gravure paper at 23°C and 55% relative humidity under a load of 1 kg.

6. Adhesive tape of at least one of the preceding claims, **characterized by** at least one machine-detectable means (X) which is machine-detectable by means of a detector, the detection being obtained in particular by a metal, transponders or by optical devices.

7. Splicing process in which the topmost paper web of a roll is overstuck with an adhesive tape (1) of at least one of Claims 1 to 7, by the noncleaving system (10) present on the back of the adhesive tape (1) being bonded to the web end of the topmost paper ply (11), while the double-sidedly adhesive cleavable system (6) on the back of the adhesive tape itself bonds to the underlying, second paper web (12) and hence secures the topmost paper web (11); in this case, initially, any release material (4) present on the self-adhesive composition (3) has not been removed, so that the portion of the self-adhesive composition (3) that is required for the splicing process is still covered with release material (4) and the roll of paper, in this state, does not have any open adhesive area; subsequently, in final preparation for the splicing process, any release material (4) still present is removed, whereupon the new roll of paper thus equipped is placed alongside an old roll of paper which has almost fully unwound and is to be replaced, and is accelerated to the same rotational speed as said old roll, then pressed against the old paper web (13), the exposed self-adhesive composition (3) of the adhesive tape (1) bonding to the old paper web (13) with the paper webs at substantially the same speeds, while at the same time the carrier (7) of the cleavable system (6) cleaves and with its remnants (7a, 7b) nonadhesively covers both self-adhesive compositions (8, 9) which were coated on it.

8. Splicing process of Claim 7, **characterized in that** the adhesive tape (1) is bonded at right angles to the running paper web or else at an acute angle of up to 30°, in particular up to 10°.

9. Splicing process of at least one of Claims 7 and 8, **characterized in that** the adhesive tape (1) is applied to the roll of paper automatically or semiautomatically by means of an automatic device.

## Revendications

1. Ruban adhésif pour le remplacement à la volée de rouleaux d'un matériau en bande plane enroulé en rouleaux, doté d'un support principal (2), d'une pâte autoadhésive (3) sur son côté avant et d'au moins un système autoadhésif revendable (6) sur son côté arrière, **caractérisé en ce qu'**au moins un système autoadhésif non refendable (10) est en outre prévu sur le côté arrière, **en ce que** le système refendable (6) est constitué de papier, d'un film ou d'un composite de papiers, de films ou de papiers avec des films et est doté d'une pâte autoadhésive des deux côtés.

2. Ruban adhésif selon la revendication 1,
**caractérisé en ce que** le système autoadhésif refendable (6) prévu sur le côté arrière et le système autoadhésif non refendable (10) prévu sur le côté arrière présentent un écart L d'au moins 2 mm, en particulier d'au moins 3 mm et de façon tout particulièrement préférable d'au moins 5 mm.

3. Ruban adhésif selon au moins l'une des revendications précédentes, **caractérisé en ce que** le système autoadhésif non refendable (10) est un ruban adhésif double face doté ou non d'un support.

4. Ruban adhésif selon au moins l'une des revendications 1 ou 2, **caractérisé en ce que** le système autoadhésif non refendable (10) est une pâte autoadhésive appliquée en cordon.

5. Ruban adhésif selon au moins l'une des revendications précédentes, **caractérisé en ce que** la pâte autoadhésive (10) prévue sur le côté arrière a une haute résistance au cisaillement, et présente en particulier une résistance au cisaillement, mesurée à 23°C et 55% d'humidité relative de l'air sous une charge de 1 kg, d'au moins plus de 1 000 minutes sur un papier couché brut et plus de 2 000 minutes sur un papier d'héliogravure.

6. Ruban adhésif selon au moins l'une des revendications précédentes, **caractérisé par** au moins un dispositif (X) qui peut être détecté à la machine au moyen d'un détecteur, la détection étant obtenue en particulier à l'aide d'un métal, d'un transpondeur ou de dispositifs optiques.

7. Procédé de raccordement dans lequel un ruban adhésif (1) selon au moins l'une des revendications 1 à 7 est collé sur la couche supérieure de papier d'un rouleau, en collant le système non refendable (10) situé sur le côté arrière du ruban adhésif (1) sur l'extrémité de la couche supérieure (11) de papier, tandis que le système adhésif double face refendable (6) situé sur le côté arrière du ruban adhésif est collé pour sa part sur la deuxième bande de papier (12) située en dessous de la première, pour ainsi immobiliser la couche supérieure (11) de papier, le matériau de séparation (4) éventuellement situé sur la pâte autoadhésive (3) n'étant d'abord pas enlevé, de telle sorte que la partie de la pâte autoadhésive (3) nécessaire pour le procédé de raccordement reste encore recouverte du matériau de séparation (4) et que dans cet état, le rouleau de papier ne présente pas de surface adhésive libre, suite à quoi, pour terminer la préparation de l'opération de raccordement, le matériau de séparation (4) éventuellement encore présent est enlevé pour placer ensuite le nouveau rouleau de papier ainsi apprêté à côté d'un ancien rouleau de papier presque complètement épuisé et à l'accélérer à la même vitesse de rotation que ce dernier, le repousser ensuite contre l'ancienne bande de papier (13), la pâte autoadhésive (3) exposée du ruban adhésif (1) étant collée sur l'ancienne bande de papier (13) lorsque les vitesses des bandes de papier sont essentiellement égales, tandis qu'en même temps le support (7) du système refendable (6) se refend et que les deux pâtes autoadhésives (8, 9) dont il est enduit sont recouvertes de par ses résidus (7a, 7b) en étant ainsi rendues non adhésives.

8. Procédé de raccordement selon la revendication 7, **caractérisé en ce que** le ruban adhésif (1) est collé perpendiculairement à la bande de papier en déplacement ou à un angle aigu d'au plus 30° et en particulier d'au plus 10°.

9. Procédé de raccordement selon au moins l'une des revendications 7 ou 8, **caractérisé en ce que** le ruban adhésif (1) est appliqué sur le rouleau de papier de manière semi-automatique ou entièrement automatique, au moyen d'un automate.
